# EUROPEAN PATENT APPLICATION

(11) **EP 1 028 190 A2**
(43) Date of publication of application: **16.08.2000**
(21) Application number: 00102845.5
(22) Date of filing: 11.02.2000
(51) Int. Cl.: D06F 39/08

(54) **Liquid detector and anti-flooding device using such detector**

(30) Priority: 12.02.1999 IT TO990127
(71) Applicant: ELTEK S.p.A., I-15033 Casale Monferrato (Alessandria) (IT)
(72) Inventor: Gadini, Costanzo, 15033 Casale Monferrato (AL) (IT)
(74) Representative: Dini, Roberto, Dr. Ing.

(57) **Abstract**

A liquid detector is described, of the type capable of generating an intervention control for a associated device, said detector comprising:
- actuating means (34;34';34") capable of movement between a first position, in which said intervention control is not generated, and a second position, in which said intervention control is generated;
- sensor means (35) of insoluble type, apt to detect the presence of liquid and consequently cause said actuating means (34;34';34") to pass from said first position to said second position.

According to the invention:
- upon absence of liquid, said sensor means (35) are normally operative for opposing themselves to the passage of said actuating means (34;34';34") from said first position to said second position;
- following their contact with liquid, said sensor means (35) are apt to have their consistency or solidity reduced, for allowing said actuating means (34;34';34") taking said second position.

## Description

The present invention relates to a liquid detector and to an anti-flooding safety device using such a detector.

Liquid detectors are used in various fields. For instance, it is known that in the field of washing machines, such as laundry washers and dishwashers, there may be the risk of home flooding, due to a sudden leakage from the supply system for the washing liquid; the causes of such unpredictable leakages may be due to faults of the machine internal devices (such as jammed solenoid valves or water supply pressure-switch, etc.) or likely cracked pipes for wash liquid intake.

In order to avoid such risks, anti-flooding safety devices are known, which allow a nearly continuous control of the presence of likely liquid leakages; these devices mainly operate by stopping the water supply from the mains to the utilizing appliance, by means of appropriate intercepting means, when a water leakage is detected by suitable sensor means.

A first type of such safety devices usually provides at least a mechanical actuation valve, which is placed at the beginning of a water supply duct from the water mains; this device also comprises an external hose enclosing said supply duct, thus providing a closed hollow space delimited between the pipe and the hose.

The device also provides sensing and actuating means, appropriately arranged inside the hollow space (usually in the area of a valve body for the connection to a tap), which on one hand provide for detection of a leakage and, on the other hand, for mechanical actuation of a shutter; practically, in the event of a failure of the water supply duct to the household appliance, water outflow will gradually collect inside the hollow space until it reaches the sensing-actuating means which, as soon as the leakage is detected, will cause the shutter to close and stop water flow from the mains to the supply duct.

In such applications, the sensing-actuating means typically consist of an element made of anhydrous sponge, whose expansion, following a contact with the leakage water, directly generates a force used for causing the closure movement of the shutter; typical examples of safety devices of the above type are described for instance in DE-A-36 18 258 and DE-A-37 43 842.

Safety devices of the type previously mentioned, though being reliable, have the drawback of detecting leakages solely due to a failure of the supply duct from the water mains, i.e. they are unable to detect leakages caused by faults of internal components of the utilizing appliance (such as in the event of liquid flowing directly out of the appliance tub due to a leakage from the latter, or to a failure of the level sensor or pressure-switch controlling water supply to the appliance).

For this reason, safety devices have been proposed, which generally provide at least a solenoid valve placed at the beginning of a water supply duct from the water mains and an appropriate liquid detector arranged in a liquid collecting tray located underneath the washing tub of the appliance; in general, the liquid detector comprises an electric switch, whose switching is produced by the lifting of a float.

These safety devices also comprise an external hose enclosing the above water supply duct from the water mains, and is in communication with the above collecting tray; therefore, this external hose is apt to convey into the collecting tray the water flowing out from the supply duct, should the latter fail; a consequent operation of the liquid detector is such to cause a closure of the solenoid valve.

The device described above has the advantage of performing safety functions also in the event of possible faults of the internal components of the utilizing appliance, since said tray is also apt to collect liquid flowing out directly from the appliance and not only from its supply duct.

For example, in the event of a leakage from the washing tub of the appliance, the liquid can reach the try and cause a consequent switching of the above switch; besides controlling the closure of the solenoid valve of the anti-flooding safety device, such a switching can be used by the control system of the appliance as a criterion for stopping the operation cycle eventually performed by the latter.

Some known safety devices of the type previously mentioned use pneumatic actuated valves supplied through an appropriate electric pump, instead of electric valves.

However, these electrically operated devices have some drawbacks, as they are using a float as the actual actuating means for the switching of the relevant switch.

A first drawback is that the float, in order to perform the required switching, should have rather big dimensions; as known, in fact, the force developed by a float is usually proportionate to its dimensions: the larger the float size, the higher the thrust it generates.

However, since the switching contact of a switch is generally reacted by a spring, the float should have significant dimensions so as to develop a force capable of overcoming the spring force. This determines a certain encumbrance of the water leakage sensing means, which may be difficult to be housed in the small room available in modem washing machines; obviously, appropriate kinematic systems can be provided for converting the moderate force of a small size float into a switching of the switch: however, such arrangements entail larger dimensions of the liquid detector as a whole, as well as its increased complexity and critical operation.

Another drawback for float systems is due to their intervention delay.

To this purpose it should also be considered that, in order to obtain enough lifting or movement of the float, i.e. such to produce a desired switching of the switch, a considerable volume of water has to flow into the collecting tray; since the tray usually has a rather extended section (substantially similar to the section of the appliance tub), it is obvious that a considerable quantity of water (even in the order of a some litres) will be required to ensure a float lifting of a few millimeters.

This may complicate the technical servicing for repairing the appliance, since when the latter is displaced the water collected in the tray will inevitably pour out on the floor.

In order to avoid the above problems, safety devices have been proposed, wherein the liquid detector uses an element made of compressed and anhydrous sponge, instead of a float.

It has to be highlighted how the sponges normally used to this purpose are capable of expanding also when they are in contact with minimum quantities of water; this is mainly allowed by their high absorbing capacity and their typical "shape memory".

Quite schematically, the sponge material used for obtaining such elements is soaked with water during their manufacturing process, in order to obtain its expansion condition; then, the wet part is compressed, substantially along its expanding direction, and subsequently dried.

Thus, the sponge element is blocked in a preloaded condition due to the stiffness induced by the drying and is apt to go back to its original shape again when coming in contact with a liquid.

It should be noticed that a sponge element having a few millimeters of thickness in anhydrous condition is apt to expand a several centimeters; consequently, such elements are able to operate directly both as sensors and actuators.

Therefore, in the event of a leakage, the liquid flowing into the collecting tray and reaching the sponge element may cause a volume expansion of the latter; such a sponge element is oriented so to have its expansion occurring in a determined direction and generating enough force for producing the switching of the switch.

Also anti-flooding electric safety devices using a sponge element as a sensing means for liquid leakage, though being reliable, have some drawbacks since the sponge element has to constitute a real proper element which produce an activation force, for switching the electric switch controlling the closure of the liquid intercepting means.

As already mentioned above, the switching contact of a switch is generally reacted by a spring; therefore, the sponge element should be able to develop sufficient force to overcome the force of such a spring; however, considering that the expansion of a sponge element is able to generate a force of just a few hectograms, it is clear that such an element should have certain dimensions to ensure a sufficient operation certainty.

In addition, it should be considered that the actuation based on the use of sponge elements may be negatively affected by frictions in the motion of the various parts of the liquid detector.

For example, in the instance of the above detectors, there is a need of isolating to a maximum extent the sponge element, which has to be soaked with water, from the electric switch; in this connection it should also be considered that the collecting tray is usually located in an area of the appliance being exposed to dampness.

To this purpose, the switch is usually housed in a special chamber, so that its switching contact faces a first end of a slider, placed in a proper passage; the other end of the slider is in contact with the sponge element, so that the expansion of the latter in the event of a leakage will cause the slider to move and a consequent switching of the switch.

However, insulation the switch from the external environment requires the provision of appropriate sealing means on the slider, such as O-ring seals; such sealing means are typically made of resilient material, which causes considerable frictions opposing the slider motion to a significant extent.

From the above description, it is clear how the sponge element, which represents a real proper organ for force production, should be appropriately sized in order to generate a sufficient force to the purpose; it should be considered how, in some devices according to the known state of the art, several separate sponge elements have to be placed in series between them.

Therefore, it is also clear how the bigger must be the dimensions of the sponge element, or the higher must be the number of used sponge elements, then the higher will be the final costs for manufacturing the detecting device, and consequently of the safety device as a whole.

The above drawbacks also reflect negatively on the detector dimensions, containing both the switch and the anhydrous sponge element.

To this effect it should also be considered, in general, that the thrust action produced by the expansion of an anhydrous sponge element aimed at causing an actuation, may not be extremely reproducible; consequently, in the known solutions, the necessity exist of oversizing the sponge element, as well as to provide means for appropriately "guiding" its expansion in the desired direction.

With a view to reduce the above problems related to electric safety devices, other devices have been suggested, wherein instead of electric valves or valves controlled by electric pumps, valves have been provided, whose actuation is controlled by mechanical means.

For example, DE-A-37 18 080 discloses a safety device with a valve body containing a shutter which, under normal operating conditions, is maintained by a spring in the opening position of a water passageway; the shutter is associated to a first compressed anhydrous sponge element, contained in a suitable seat delimited within the valve body; moreover, the device provides a leakage water detector located in the collecting tray, underneath the washing tub of the utilizing appliance; such a detector comprises a body housing in its lower part a second compressed anhydrous sponge element, which is apt to come in contact with likely leakage water collected in the tray.

In the upper part of the detector, a chamber is defined, being in communication through a suitable small pipe with the seat of the valve body, wherein the first sponge element is housed; liquid is present in said chamber and eventually in a portion of the small pipe; the lower wall of said chamber consists of an elastic membrane.

In the event of leakage water flowing into the collecting tray, the second sponge element expands upwards, so pressing said membrane; this determines a volume reduction of the chamber of the detector, with a consequent displacement of the liquid contained in it to the relevant small pipe; in this way, a portion of the liquid can reach the seat where the first sponge element is housed and wet the latter, causing its relevant expansion and a consequent movement of the shutter for the closure of the water passageway.

The device described in DE-A-37 18 080 does not use costly electric components, but it is clear that it has all the drawbacks previously mentioned related to the use of anhydrous sponge elements.

In particular, in fact, also in this case, the sponge element has to generate the force required for producing the deformation of an elastic membrane, and the consequent displacement of the liquid in the said small pipe; in addition, such a sponge element must be appropriately sized for generating enough force for the required purpose.

It should be considered, among other things, that in the case of DE-A-37 18 080, such problems are practically doubled, due to the presence of two different sponge elements, which are both required to produce considerable forces (one for shutter actuation and the other for transmitting the control liquid to the valve body).

In DE-A-37 18 080 the use of valves with a structure substantially similar to the valves described in the above DE-A-36 18 258 and DE-A-37 43 842 is also suggested, but they are located directly in the collecting tray; in such instances, therefore, the expansion force of a sponge element is directly used for determining the closure of a shutter in contrast to the action of a spring.

However, also such solutions have the drawbacks previously mentioned, since the sponge element has to generate the force required for the closure of the valve, which should be enough to overcome at least the reaction of a spring.

In the already cited DE-A-37 43 842, a safety device is also described, which has a pneumatic actuated valve; such a valve has a shutter which, under normal operating conditions, is maintained by a slider in the opening position of a water passageway; the slider is in turn maintained in its respective position by a stop element, being subject to the action of a spring and forming the wall of a sealed chamber; moreover the device provides a liquid detector in the collecting tray underneath the washing tub of the utilizing appliance.

Such a detector comprises substantially a pneumatic cylinder which, through a suitable small pipe, is in communication with said sealed chamber; said cylinder has a plunger restrained in its rest position by means of a shaped window defined in a plate with a squared profile; such a plate has an anhydrous sponge element underneath, and is maintained in the locking position of the plunger by means of a leaf spring.

Should leakage water flow into the collecting tray, the sponge element, by getting wet, expands upwards, overcoming the action of the leaf spring and causing the plate to be lifted; the consequent displacement of the said window releases the plunger, which under the thrust of a respective spring rapidly moves inside the cylinder. Such a plunger displacement causes the compression of the air in the cylinder, so that the compressed air reaches, through the relevant connecting small pipe, the said sealed chamber, causing the valve stop element to be displaced. The movement of the stop element determines the consequent displacement of the said slider, which let the valve shutter to close the water passageway.

Therefore, as it can be seen, also the pneumatic device described in DE-A-37 43 842 does not use costly electric components, but obviously has all the drawbacks previously mentioned with reference to the use of anhydrous sponge elements.

In this respect, it should be noticed how the various springs provided by the known devices should have in general a moderate force, since this force has to be overcome by the simple force generated by the expansion of the sponge element; however, the limited force developed by such springs may represent another criticality reason, concerning the operation of the known devices, as the latter may intervene due to accidental impacts. Therefore, it is clear that, in order to be able to use springs capable of developing higher operating energy, sponge elements of even greater dimensions will have to be employed.

DE-A-44 02 502 describes a safety device, in the valve body of which a shutter is maintained in its normal operating position against the action of a first spring, i.e. in the opening position of a water passageway; the shutter is maintained in such a position by a lock-pin connected by a small cable to a liquid detector located in the collecting tray placed underneath the washing tub of the utilizing appliance.

Substantially, such an organ comprises a slider associated to the second end of said cable, subject to the reaction of a second spring; the slider is maintained in its respective rest position by means of a hooking - also subject to the action of a respective third spring - with an anhydrous sponge element placed below it.

Should leakage water flows into the collecting tray, the sponge element expands upwards and cause the hooking to lift up, so as to overcome the opposite force of the relevant spring; thus the slider is released and moves fast under the thrust of the relevant spring.

This slider displacement causes a pull of the above cable and a consequent movement of the lock-pin, that releases the shutter; under the action of the relevant spring and the water flow the shutter can close the water passageway.

Obviously, also the fully mechanical device described in DE-A-44 02 502 has all the drawbacks previously mentioned in relation to the use of anhydrous sponge elements as actuating means.

In particular, also in this instance the spring opposing the slider movement must have a moderate force, since it has to be overcome by the simple force generated by the expansion of the sponge element; this may determine, on one hand, accidental tripping of the detector and, on the other hand, a jamming of the detector should significant frictions are determined between the moving parts.

Finally, further safety devices of the type described in DE-C-39 05 661 are also known, wherein the water leakage detector is positioned on the floor.

In this instance, the device provides an interception valve located at the beginning of the water supply duct to the washing machine, connected to one end of a small cable; the other end of the cable, vice-versa, is constrained by a spring lever which, under normal conditions, is locked by a sensing element consisting of a common sugar cube, placed on the floor.

Whenever a liquid reaches the area of interest on the floor, due to a leakage of any nature, the consequent dissolving of the sugar cube releases the spring lever, which will actuate the cable and close the interception valve.

Also this kind of solution has anyway several drawbacks, mainly due to the sugar sensing means being placed on the floor.

This causes operation of the safety device, for example, also if a flooding not due to the operation of household appliances associated with the safety device occurs in the household environment; in fact, a sensor conceived as above runs the risk of actuating the interception also in those instances where, for example, the floor is simply washed or when an accidental pouring of liquid occurs (for example, the simple pouring of the contents of a drink glass in correspondence with the sugar element); such a drawback is particularly annoying since the environments where anti-flooding safety devices usually operate are the kitchen and the bathroom, where water is frequently used for various reasons.

Theoretically, a sensor made from soluble material may be positioned in the typical collecting try underneath the tub of the appliance.

However, also in this instance, the sensor results in being entirely exposed in the environment, subject to a consequent fast deterioration and/or loss of its necessary intervention features (it should be considered, in fact, that the collecting tray is usually located in an area exposed to dampness); now, considering the features proper of soluble elements, such an exposition may cause bad operation in time, such as having the safety device not operating or operating also in the absence of water leakage.

Additionally, soluble materials of the type described in DE-C-39 05 661 are featured by their considerable fragility; occasional hitting on the device, which may possibly occur during transportation or due a fall (e.g. in the course of the installation), can cause a breakage of the element made from soluble material, and a consequent need of replacing it.

These breakage would exist also during normal life time of the device, even if housed inside the collecting try of the appliance, due to continuous operating vibrations of the appliance itself (think for instance to the spin phase of a laundry washing machine) or to occasional mechanical stresses the appliance may be subject to (think for instance to a violent door closing of a dishwasher).

It should also be noticed how the time required for obtaining a sufficient dissolution of the sensing element is, in general, excessive with respect to the flooding risk which occurs with large flow-rate leakage, or anyway with respect to the maximum times provided by the Standards or the specifications requested by the manufacturers of household appliances; in other words, the sensing element may request several tens of seconds or even minutes for dissolving to such an extent being sufficient for allowing the actuation of the device, in which case a partial flooding of the household environment could take place.

The present invention has the aim of solving one or more of the above cited drawbacks and indicate a liquid detector and an anti-flooding device using such a detector, being of improved realization, more efficient, more compact and cost-effective with respect to the known devices fulfilling the same functions.

Within this general frame, it is an aim of the present invention is to indicate a liquid detector and an anti-flooding device using such a detector, which utilize leakage sensing means having smaller dimensions and lower costs compared to the known devices fulfilling the same functions, in particular also for those instances where the sensing means utilized are of the same type as used according to the known state of the art.

Another aim of the present invention is to indicate a liquid detector and an anti-flooding device using such a detector, which have a lower cost compared to the known devices fulfilling the same functions.

A further aim of the present invention is to provide a liquid detector and an anti-flooding device using such a detector, whose sensing means are not required to generate forces or thrusts for producing an actuation being necessary to the operation of the detector, or of the safety device, such actuation being assigned to other components.

A further aim of the present invention is to provide a liquid detector and an anti-flooding device using such a detector, which can warrant an actuation force, and therefore an intervention certainty, being higher with respect to the known devices fulfilling the same functions, though using smaller liquid sensing means with respect to the current state of the art.

A further aim of the present invention is to provide a liquid detector and an anti-flooding device using such a detector, wherein elastic elements or springs, capable of developing higher forces compared to the elastic elements used in known devices fulfilling the same functions, can be used in order to assure a higher certainty of intervention.

In order to achieve one or more of such aims, it is the object of the present invention a liquid detector and an anti-flooding safety device incorporating the features of the annexed claims, which form an integral part of the present description.

Further aim, features and advantages of the present invention will become apparent from the following detailed description and annexed drawings, which are supplied by way of non limiting example, wherein:
- Fig. 1 shows schematically a possible application of a liquid detector according to the present invention, combined with an anti-flooding safety device mounted on a household washing machine;
- Fig. 2 shows schematically in cross section a first possible embodiment of an anti-flooding safety device comprising a liquid detector according to the present invention, in a first operating condition;
- Fig. 3 shows schematically in cross section the anti-flooding safety device of Fig. 2 in a second operating condition;
- Fig. 4 shows schematically in cross section a liquid detector of an anti-flooding safety device according to a possible second embodiment of the present invention, in a first operating condition;
- Fig. 5 shows schematically in cross section the anti-flooding safety device of Fig. 4 in a second operating condition;
- Fig. 6 shows schematically in cross section a liquid detector of an anti-flooding safety device according to a possible third embodiment of the present invention, in a first operating condition;
- Fig. 7 shows schematically in cross section the anti-flooding safety device of Fig. 6 in a second operating condition.

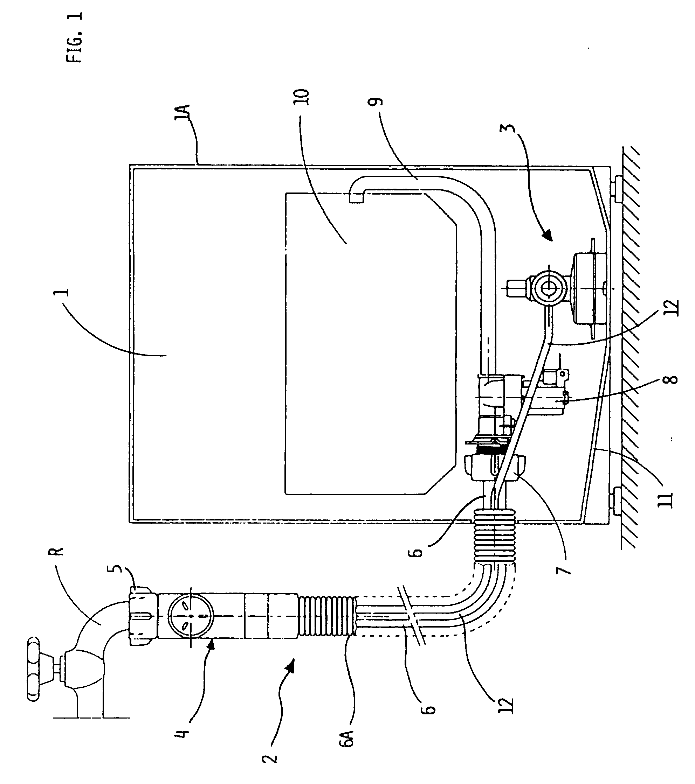

In Fig. 1 is schematically represented a household washing machine 1, such as a dishwasher, fitted with an anti-flooding safety device 2 integrating a liquid detector 3 according to a possible embodiment of the present invention.

This figure simply represents the general structure of a safety device 2 and of the relevant liquid detector 3, whereas various possible embodiments of the latter according to the present invention will be illustrated and described with reference to the subsequent figures; to this purpose it should be noted that the shapes and/or dimensions and/or proportions of the components illustrated in Fig. 1, in particular of the detector 3, are merely intended schematically.

As it can be noticed, the safety device 2 has a valve body 4 connected through a ring connector 5 to a tap R of the water mains; means for intercepting the water flow are arranged within the valve body 4, which will be described in the following.

The device 2 has a first inner duct 6 for water supply from the water mains; the first end of this duct 6 is connected to the valve body 4, whereas the second end of the duct 6 is connected through a ring connector 7 to the inlet of a solenoid valve 8, of the type currently used for the control of the water supply to a washing machine; reference 9 indicates a tubing which connects the outlet of the solenoid valve 8 to a tub 10 of the washing machine; the solenoid valve 8 is not detailed herein, since its shape and operation are in themselves known.

Below the washing tub 10 a collecting tray 11 is provided.

The device 1 also comprises an external hose 6A departing from the valve body 4 and ending inside the cabinet 1A of the machine 1, at a higher level than the tray 11. This external hose 6A surrounds the inner duct 6 and is open on its lower end, so that any leakage eventually due to a breakage of the inner duct 6 may be conveyed to the tray 11.

Preferably, the inner duct 6 is made of reinforced rubber, whereas the external hose 6A is from plastic corrugated material.

The liquid detector 3 according to the invention is positioned in the lowermost part of the collecting tray 11; as it can be imagined, the tray 11 is apt to receive by gravity possible water leakages due to a malfunctioning of internal components of the machine 1 (such as a breakage of the tub 10), or to the breakage of the inlet duct 6.

Reference 12 indicates a transmission element, having the function of transferring a suitable control from the detector 3 to the intercepting means arranged within the valve body 4, said control being indicative that a liquid leakage is in course.

Therefore the transmission element 12 extends from the detector 3 to the valve body 4; preferably, at least a portion of the transmission element 12 covers the hollow space delimited between the inner duct 6 and the external hose 6A.

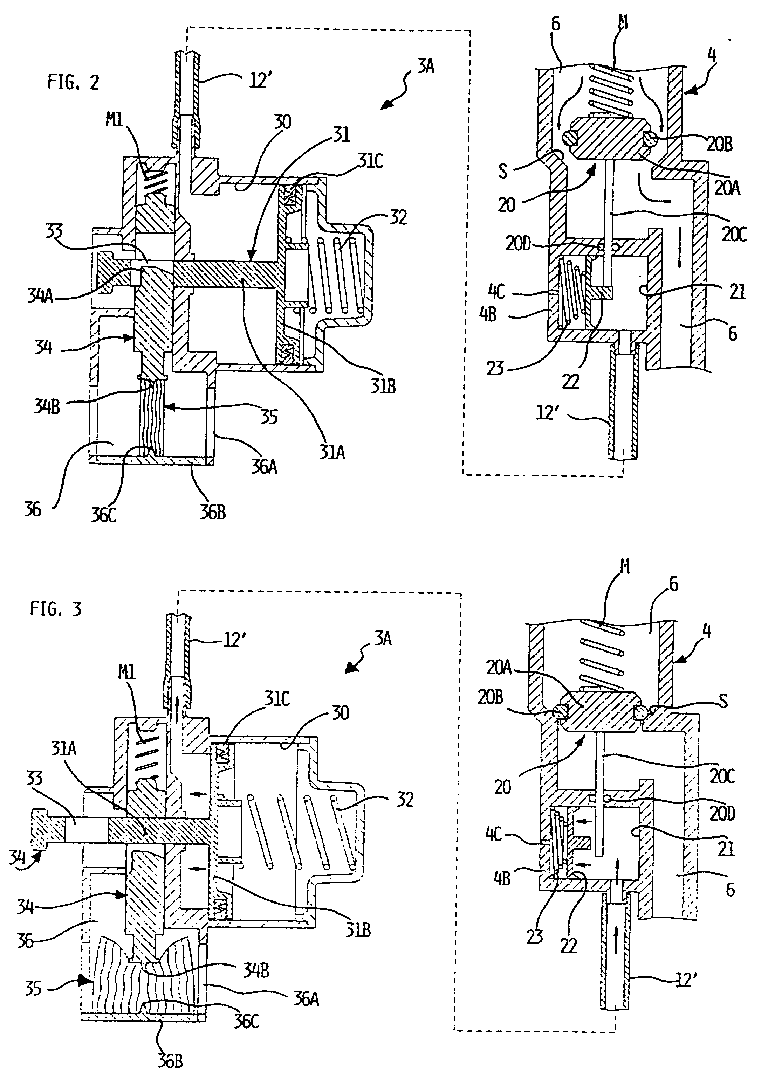

Figs. 2 and 3 show a first possible embodiment of a liquid detector according to the present invention, being coupled to a first type of anti-flooding safety device 1.

As shown on the right side of Figs. 2 and 3, the safety device according to the proposed embodiment, is fitted with a pneumatic interception valve, of the normally open type, located along the water supply duct 6 to the washing machine.

This valve, located inside the valve body 4, comprises a shutter 20 arranged within the inner duct 6, which is subject on its upper portion to the thrust of a spiral spring M; the shutter 20 has an occlusion element 20A, substantially shaped like a double truncated cone, having a seal ring 20B provided along its maximum circumference; the occlusion element 20A, in particular in correspondence with its own seal ring 20B, is sized to rest on an underlying narrowing S of the duct 6, wherein the occlusion element itself is positioned; as it can be understood, the closure of the occlusion element 20A on the narrowing S causes the closure of the duct 6, and consequently the interruption of the water flow to the washing machine.

The shutter 20 has a rod portion 20C, whose lower end is inserted in an airtight chamber, resting on a supporting element 22 which define a movable wall of the airtight chamber 21 itself; between the supporting element 22 and a wall 4B of the valve body 4 an elastic element 23 is located, such as a spiral spring.

Therefore, under normal operating conditions the element 22 is able to maintain, under the action of the spring 23, the shutter 20 in a opening position of the duct 6, opposing the action of the spring M.

As it can be noticed, along the rod portion 20C of the shutter 20, suitable sealing means 20D are provided for the chamber 21 (such as one or more seals of the O-ring type), while the wall 4B has an opening 4C for a likely venting of the air being present between the supporting element 22 and the wall 4B itself.

Reference 12' indicates a small pipe in communication with the chamber 21, whose function will be clarified in the following.

On the left side of Figs. 2 and 3, reference 3A indicates the liquid detector according to the invention as a whole, which in the specific instance is also able to generate a pneumatic pressure apt to produce the closure of the shutter 20.

The detector 3A has a body preferably made from thermoplastic material, with a chamber 30 housing a piston or plunger 31; the plunger 31 has a central rod 31A and a plate 31B; along the external circumference of the plate 31 B a gasket 31 C is present for operating a seal on the inner surface of the chamber 30.

The plate 31B also has, on its surface being opposite to the rod 31A, a striker for the positioning of a spiral spring 32, which operates right between the plate 31B and the bottom wall of the chamber 30.

The opposite wall of the chamber 30 has a central passage, through which a portion of the rod 31A protrudes out of the chamber 30; a cavity or engaging seat 33 is defined on such a portion of the rod 31A; sealing means operating between the rod 31A and the chamber 30 can eventually be provided, which are not represented in the figure for simplicity's sake.

Under normal operating conditions of the device, a tooth 34A, being present in a cavity of a slider 34, is engaged in the hooking cavity 33; said tooth 34A is capable of movement in a transverse or perpendicular direction with respect to the rod 31A; in this hooking position shown in Fig. 2, the plate 31B keeps the spring 32 in a compressed condition.

The slider 34 is supported in its normal work position by an underlying sensing or supporting element 35, made of anhydrous compressed sponge, against the action of a spiral spring Ml, which operates between the upper end of the slider 34 and a surface of the body of the detector 3A.

The sponge element 35 is housed in a chamber 36 having side openings 36A for the inlet of likely leakage water; the lower wall 36B of the chamber 35 has at least a pointed projection 36C directed to the sponge element 35, said projection being in correspondence with the positioning point of the sponge element; similarly, a pointed projection 34B is delimited at the end of the slider 34 resting on the sponge element 35.

As it can be noticed, the sponge element 35 results in being driven between the above said pointed projections 36C and 34B, where it is maintained in position.

Always on the left side of Fig. 2, reference 12' indicates the second end of the small pipe previously mentioned, which connects the chamber 30 of the detector 3A to the chamber 21 of the valve body 4, wherein the pneumatic actuated shutter 20 is located.

As it can be seen, the small pipe 12' realizes the transmission element 12 of Fig. 1.

According to the above, it can be seen how the set consisting of the chamber 30, plunger 31 and spring 32 forms a pneumatic cylinder apt to generate an air pressure which is used for the purpose of actuation of the above said valve for intercepting the water flow to the washing machine.

Operation of the anti-flooding safety device shown in Figs. 2-3, under normal operating conditions, is as follows.

While the tap R of the water mains connected to the device 2 is open, water can freely flow in the supply duct 6.

This water flow is enabled by the opening of the supply solenoid valve 8, arranged within the washing machine 1; such a solenoid valve 8 is controlled in a known manner by the control system of the machine itself.

In such a situation, as said, the supporting element 22 maintains the shutter 20 of the duct 6 open, so that the water from the mains can reach the washing machine; at the end of each water supply phase, the control system of the machine causes the solenoid valve 8 to close.

In the event of a leakage due to a breakage of the duct 6 or of an internal component of the washing machine, water reaches the collecting tray wherein the detector 3A is located; this water is then free to come in contact with the sponge element 35 through the openings 36A. The sponge element 35, absorbing water, rapidly increases its volume, according to an expanding direction which is substantially perpendicular to the direction of movement of the slider 34 and to the release direction of the spring M1 (as highlighted in Fig. 3).

Thus, a loss of the initial solidity features of the sponge element 35 will take place, i.e. its subsidence or settling or a reduction of its consistency; such a settling is favoured by the thrust downwards produced by the slider 34, which is reacted by the relevant spring Ml and by the presence of the end tip 34B of the slider 34.

Following such a settling, the element 35 is no longer capable of exerting its retaining or supporting function for the slider 34, which is then able to slide downwards until the tooth 34A is released from the hooking cavity or seat 33 of the rod 31A.

Therefore, the plunger 31 moves fast under the action of the spring 32, from right to left with reference to the figures; such a movement generates an air pressure inside the chamber 30, which will then escape into the small pipe 12' up to the chamber 21; it should be noticed, for instance, that in the wall of the chamber 30 on which the spring 32 is resting a passage for the air is provided (not represented here), in order to avoid a possible depression during the movement of the plunger 31.

Air compression in the chamber 21 defined in the valve body 4 is such to overcome the opposing action of the spring 23 and likely frictions, and consequently cause a horizontal translation of the supporting element 22, permitted by the presence of the opening 4C of the wall 4B, which operates as an air vent.

Thus, since the required support for the shutter 20 is no longer available, the latter may displace itself downwards, until the occlusion element 20A with its relevant sealing ring 20B rests on the narrowing S and is maintained there by the pressure of the water entering the duct 6 and by the spring M; the duct 6 is thus closed and this hinders a further water supply to the washing machine.

The above operating situation of the device is shown in Fig. 3.

It is obvious that the detector 3A realized as described with reference to Figs. 2 and 3 allows for obtaining substantial advantages compared to the prior art.

According to the invention, and differently from the prior art, the sponge element 35 is not used for generating the force required for producing the displacement of a certain component of the safety device; on the contrary, such element 35 is used to maintain or support such component (represented by the slider 34) in a determined position, eventually opposing the action of an elastic element (represented by the spring Ml) and for allowing that same component to move following the expansion of the element 35.

As previously mentioned, the force that can be generated by the expansion of a sponge element or several sponge elements arranged in series between them, is quite moderate; on the contrary, a sponge element is under anhydrous conditions capable of opposing, along its surfaces perpendicular to the surfaces directed in the expanding direction, an external force which is several times higher than the force generated by the expansion itself. For example, one same sponge element may generate, along its expanding direction, a force of a few hectograms, but is capable of opposing, in anhydrous conditions and according to a direction substantially perpendicular to the expansion direction, external forces of some kilograms (a compressed element made from anhydrous sponge having dimensions of about 20 x 10 x 7 mm can support a load of about 30 Kilograms).

Based on the above considerations, the sensing element according to the present invention is therefore provided:
- while dry, for maintaining in a certain position, by means of two of its surfaces perpendicular or anyway angled with respect to the to the expanding direction, a detector capable of movement; ; under these conditions, the sensing element opposes itself to the movement force of the component along said its two surfaces;
- while wet, i.e. following the expansion and/or softening, for allowing said component to move; under these conditions, the expansion determines a considerable consistency reduction of the sensing element along said its two surfaces, or a reduced capability of the sensing element to oppose itself to the movement force of the component.

Therefore, according to the present invention, the sensing element 35 is appropriately oriented inside the detector 3, so that its expansion occurs in a substantially perpendicular or anyway angled direction with respect to the movement direction of the slider 34.

In the specific case of the examples represented in the figures, said two surfaces are the upper and lower surfaces of the sponge element 35, with the lower surface resting on the wall 36B of the chamber 36, and the slider 34 resting on the upper surface; therefore, as clarified above, the element 35 can easily maintain the slider 34 with the tooth 34A hooked in the seat 33, notwithstanding the spring action Ml.

It should be noticed how the pointed projections 36C and 34B are accomplishing a significant function of maintaining the sponge element 35 in the correct operating position, without determining however any hindrances to its expansion.

From the above it is clear, therefore, how the size of the sponge element 35 can be clearly smaller than the size of any anhydrous sponge elements used in known liquid detectors fulfilling the same functions, for example the one mentioned in Fig. 3 of DE-A-37 43 842.

In such known units, in fact, the sponge element has to generate a force apt to cause actuation of the device; for this reason, the sponge element according to the prior art must be sufficiently sized for the purpose; according to the present invention, vice-versa, the element 35 can be clearly smaller, since it should only exert a simple supporting function.

Considering that the sponge element according to the invention is capable of supporting loads of several kilograms, it is clear how the spring Ml apt to produce the movement of the slider 34 may be of the type apt to generate a decidedly higher force compared to the forces achievable according to the prior art; this ensures a higher intervention certainty of the detector represented in the Figs. 2 and 3.

In this connection, it should also be mentioned how in the detector according to the invention, the element 35 is provided, while dry, for opposing the expansion force or releasing of an elastic element (M1) and, while wet, to allow such an elastic element (M1) to expand or be released. Vice-versa, in the solution according to the prior art, a sponge element is arranged for ensuring, while dry, a release or expansion condition of an elastic element and, while wet, for compressing such an elastic element.

Moreover, according to the prior art, no examples are available, wherein the shutter means enter the space the leakage detector 35 occupies when is a dry condition.

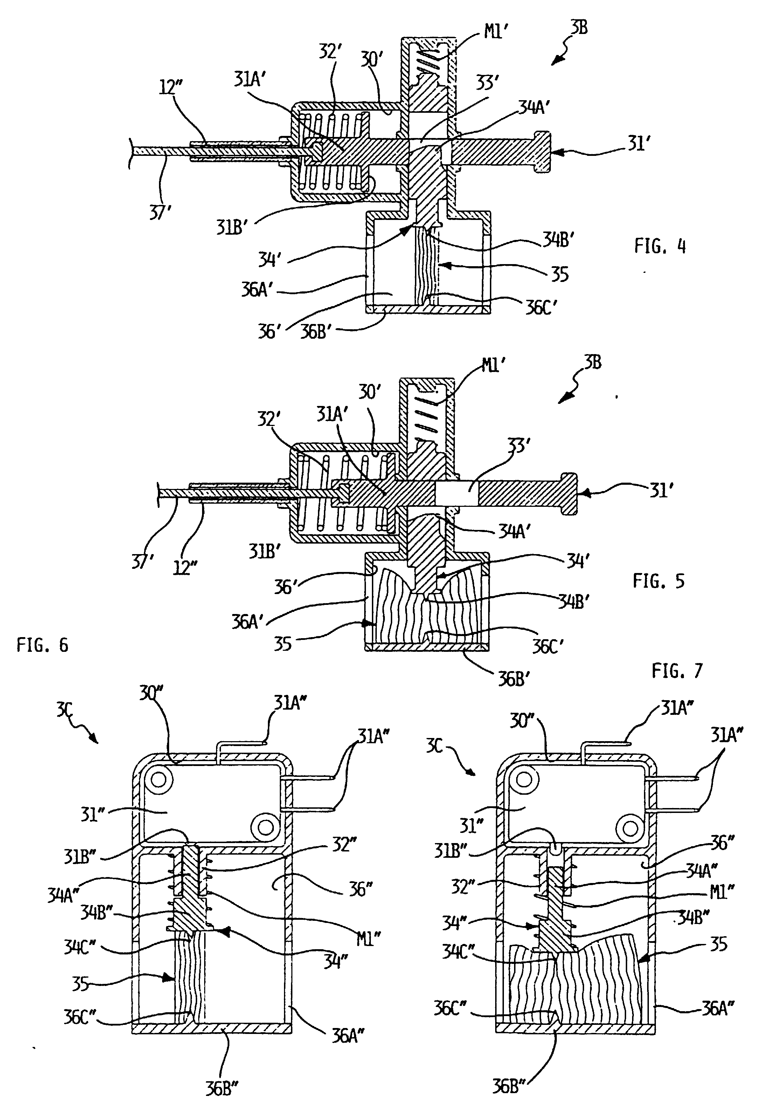

Figs. 4 and 5 illustrate a possible second embodiment of a liquid detector, in particular being associated to a second type of anti-flooding safety device.

In such an instance, the anti-flooding safety device has a mechanically actuated intercepting valve, of the normally open type, which is located along the water supply duct to the washing machine.

In Fig. 4 the detector according to the invention is indicated with 3B. This detector is also apt to generate the pull of a small cable required for the closure of a mechanical operated intercepting valve, which is located in the valve body 4. This valve may be of a known type, in particular of the type described in DE-A-44 02 502.

Preferably, the detector 3B has a body made of thermoplastic material, wherein a chamber or seat 30' is defined for a sliding component 31'; such a component 31' has a central rod 31A' and a plate 31B'.

In the portion inserted inside the seat 30', the plate 31B' also has a flange or striker for the positioning of a spiral spring 32', which operates right between the plate 31B' and the bottom wall of the seat 30'.

The opposite wall of the seat 30' has a central passage, through which a portion of the rod 31A' protrudes out of the seat 30'; this rod portion has an hooking cavity 33'.

Under normal operating conditions of the device, a tooth 34A', being present in a cavity of a slider 34', results in being engaged in the cavity 33'; said tooth 34A' is capable of movement in a transverse or perpendicular direction with respect to the rod 31A'; in this hooking position, the plate 31B' keeps the spring 32' in a compressed position.

The slider 34' is supported in its normal work position by a sensing or supporting element 35 made of compressed anhydrous sponge, against the action of a spiral spring M1', operating between an end of the slider 34' itself and a surface of the body of the detector 3B.

The sponge element 35 is housed in a chamber 36' having side openings 36A' for the entry of likely leakage water; the lower wall 36B' of the chamber 35' has at least a pointed projection 36C', directed to the sponge element 35 in correspondence with the positioning point of the latter; similarly, a pointed projection 34B' is defined at the end of the slider 34' resting on the sponge element 35.

Therefore, as it can be noticed, the sponge element 35 is driven between the pointed projections 36C' and 34B', where it is maintained in position.

At the end of the rod 31A' which stays within the seat 30', a small cable 37' is associated, said cable being arranged in a suitable sheath 12"; the other end of such a cable 37' is connected to a mechanical block element, not represented, which maintains in its opening position the mechanical operated intercepting valve provided in the valve body of the anti-flooding safety device (as said, reference is made to DE-A-44 02 502 for further details about a possible embodiment of such a valve and relevant mechanical block).

Therefore, in this instance, the cable 37' and relevant sheath 12" represent the transmission element 12 of Fig. 1.

Operation under normal operating conditions of the liquid detector shown in Figs. 4-5, is as follows.

While the tap R of the water mains connected to the device 2 is open, water can freely flow to the supply duct 6.

This water flow is enabled by the opening of the supply solenoid valve 8, located inside the washing machine 1; such a solenoid valve 8 is controlled in a known manner by the control system of the machine itself.

In such a situation, the above said block element maintains the mechanical valve arranged inside the valve body of the device 2 in the open position of the duct 6, to allow water from the mains to reach the washing machine; at the end of each water supply phase, the control system of the machine causes the solenoid valve 8 to close.

In the event of a leakage, water reaches the collecting tray 11 containing the detector 3B; this water is then free to come in contact with the sponge element 35 through the openings 36A' of the chamber 36'. The sponge element 35, by absorbing water, rapidly increases its volume according to an expanding direction substantially perpendicular to the movement direction of the slider 34' and the release direction of the spring M1 (as highlighted in Fig. 5).

Therefore, also in this case, a loss of the initial solidity features of the sponge element 35 will take place, i.e. its subsidence or settling or reduction of its consistency; such a settling is favoured by the thrust downwards produced by the slider 34', duly reacted by the relevant spring Ml'. Following this settling, the element 35 is no longer capable of exerting its own retaining or supporting function for the slider 34', which is then able to slide downwards until the tooth 34A' is released from the hooking cavity or seat 33' of the rod 31A'.

Therefore, with reference to Figs. 4 and 5, the sliding element 31' under the action of the spring 32' moves fast from left to right; such a movement generates a pull of the cable 37' and a consequent displacement of above said block element freeing the intercepting valve, which can then close so stopping a further water flow to the washing machine.

The situation of intervention of the detector 3B is represented in Fig. 5.

It is obvious that also the sensing group 3B realized as described with reference to Figs. 4 and 5 allows the achievement of the same advantages previously described with reference to the embodiment of Figs. 2 and 3. In particular:
- the size of the sensing element 35 is clearly smaller than for the sponge elements commonly utilized on currently known liquid detectors (for example of the type indicated in DE-A-44 02 502);
- the sensing element 35 is not requested to generate a force apt to actuate the device, but merely for supporting the slider 34' and detecting a leakage (also in this instance the element 35 is provided, while dry, for opposing the expansion force or releasing the spring Ml' and, while wet, to allow such a spring Ml' to expand or be released);
- the spring Ml', apt to produce the movement of the slider 34', may be of a type apt to generate a force clearly higher than the forces obtained with the springs of the prior art; this will ensure a safer intervention of the detector 3B.

Finally, in view of the high forces being developed according to the invention, the small cable 37' could be connected to, and directly actuated by, the slider 34'according to a possible implementation not shown here.

Figs. 6 and 7 show a further possible embodiment of a liquid detector according to the present invention, which is, in particular, of the type capable of electrically controlling the operation of a remote interception valve, which is part of an anti-flooding safety device of a third type.

In this instance, the safety device is provided with an intercepting valve, which is electrically supplied, or pneumatically supplied through an electric pump, located along the water supply duct to the washing machine; as in the previous instances, the detector of Figs. 6 and 7 is located in a collecting tray underneath the tub of the machine itself, and electrically connected to said electric valve or electric pump, or arranged along the supply circuit of the valve or the pump.

In Fig. 6, reference 3C indicates the liquid detector as a whole, which has a body preferably made of a thermoplastic material, wherein is delimited an upper chamber 30" housing an electric switch or deviator 31", fitted with relevant electric terminals 31 A".

The switch 31" has a switching contact indicated with 31B", in correspondence with a passage 32", departing from the lower wall of the chamber 30".

Reference 34" indicates a slider, which has an upper portion 34A" inserted in the passage 32", whose end is apt to enter the chamber 30" and maintain the contact 31B" pressed; the slider 34" has then a lower portion 34B" extending outside the passage 32".

The slider 34" is supported in its normal work position by a sensing or supporting element 35 made of a compressed anhydrous sponge, located underneath the portion 34B"; reference Ml" indicates a spiral spring operating between the portion 34B" of the slider 34" and the lower wall of the chamber 30", which spring M1" tends to push the slider 34" downwards, i.e. on the sponge element 35.

The sponge element 35 is housed in a chamber 36" having side openings 36A" for allowing possible leakage water to enter; the lower wall 36B" of the chamber 35" has at least a pointed projection 36C", directed to the sponge element 35 in correspondence with the positioning point of the latter; similarly, a pointed projection 34B" is defined at the end of the slider 34" which rests on the sponge element 35.

As it can be noticed, therefore, the sponge element 35 is driven between the pointed projections 36C" and 34B", where it is maintained in position.

Terminals 31A" of the switch 31" are connected to appropriate electric leads, not represented, which are part of the supply circuit of the above said electric valve, or the electric pump, of said safety device; let us consider in this connection that the intercepting valve of the device according to the proposed variant embodiment is a valve of the normally closed type, connected in a known way to the control system of the washing machine. When the washing machine is switched on, the electric valve is supplied for its opening; vice-versa, in the instance of a pneumatic valve, when the washing machine is switched on, the above said electric pump is supplied and generates compressed air for maintaining the pneumatic valve open.

At any rate, at least a pair of leads, which extends from the detector 3C to the valve body, realizes the transmission element 12 of Fig. 1.

In the example of Fig. 6, i.e. with the contact 31B" pressed, the switch 31" is closed and the electric supply circuit of the valve or of the electric pump results in being activated; thus, water can freely flow to the washing machine.

Vice-versa, in the event of a leakage, water reaches the collecting tray containing the unit 3C; this water is then free to come in contact with the sponge element 35 through the openings 36A".

The sponge element 35, by absorbing water, rapidly increase its volume according to an expanding direction substantially perpendicular to the direction of movement of the slider 34" and the release direction of the spring M1" (as highlighted in Fig. 7).

Thus, a loss of the initial solidity features of the sponge element 35 takes place, i.e. its settling or reduction of its consistency; such a settling is favoured by the thrust downwards produced by the slider 34", which is duly reacted by the relevant spring Ml".

Following such a settling, the element 35 is no longer capable of exerting its own retaining or supporting function for the slider 34", which is then able to slide downwards; thus, the contact 31A" being no longer pressed, is free to switch, also under the action of an internal elastic element of the same the switch 31".

Such a switching causes the switch 31" and the supply circuit of the electric valve or pump to open, stopping a further water flow to the washing machine.

The above situation of intervention of the unit 3C" is shown in Fig. 7.

It is obvious that for other applications the contact 31B" of the switch 31" may be of the normally closed type, instead of a normally open contact as in the previous example.

It is also clear that the sensing unit realized according to Figs. 6 and 7 ensures the achievement of the same advantages previously described with reference to the embodiments of Figs. 2-5, since:
- the size of the sensing element 35 is clearly smaller than for the floats and anhydrous sponge elements commonly used on known detectors for electrically operated safety devices;
- the sensing element 35 is not requested to generate a force apt to actuate the device, but merely for supporting the slider 34" and detecting a leakage (also in this instance the element 35 is provided, while dry, for opposing the expansion force or release of the spring Ml" and, while wet, to allow such a spring Ml" to release);
- the spring M1", apt to produce the movement of the slider 34" and the spring opposing to the movement of the contact 31A" may be of the type being able to generate a clearly higher force than the forces achievable with the springs according to the prior art; this ensures a higher certainty of intervention of the detector 3C.

Concerning the latter aspect, it will be appreciated how along the upper portion 34A" of the slider 34", suitable sealing means may be advantageously provided, for example in the form of seals of the O-ring type, so as to further insulate the electric switch 31" from the chamber 36".

It has also to be noticed that, for the reasons set out above, the spring Ml" may have a considerable force, so that the effect of possible frictions in the movement of the slider 34" (due to the presence of resilient sealing means), results in being fully irrelevant.

It is obvious that the sensing or supporting element 35 may also be realized in a material other than anhydrous sponge, such as for example an appropriate paper, or a mixture of fibres or materials of vegetal origin, or a cellulose product (eventually inclusive of appropriate binding and/or preserving agents) or, more in general, any materials being subject, in the case of wetting, to a quick reduction of its consistency, or a rapid collapsing or loosing of its initial solidity features.

Such a material may be either porous or permeable, featured in general by a capillary surface tension which favours the liquid absorption.

Moreover, such a material should have satisfactory mechanical properties to withstand stresses caused by impacts and/or falls the detector could be occasionally subject to, such as during transportation and/or sale activity (it should be considered, to this purpose, that for example liquid detectors and/or anti-flooding safety devices are often sold as spare parts in stores or large department stores, and are therefore subject to handling); in particular, the material forming the sensing element 35 should withstand a fall down of the device 1 from at least one meter height.

For the above reason, the element 35 should be a material of the non-soluble type, due to the fragility of such materials.

Moreover, in order to allow a movable element to be supported by a leakage sensor made of a soluble material, the latter should have a high resistance degree, in which case such a soluble material should be extremely compact and have a high density; however, such a necessity would considerably reduce the capacity and rapidity of dissolution of the sensor, leading to a delayed intervention of the detector, with the consequent risks.

The features of the present invention are clear from the above description, as also its advantages are clear.

According to the invention, the liquid sensing means ensure an extremely compact realization of the detector.

In such a frame, it has to be appreciated, in fact, how the dimensions of the element 35 can be clearly smaller than the dimensions of the anhydrous sponge elements commonly used on known anti-flooding safety devices.

As said, the known devices require a sponge element for generating a force apt to actuate the detector; for this reason, the sponge element provided according to the prior art must be of such a size to fulfil this purpose, to the point that in some instances several sponge elements have to be arranged in series to each other.

According to the present invention, vice-versa, the element 35 can clearly have a smaller size, since it should simply have a supporting function; such a function is exerted by the element 35 along a direction substantially perpendicular or anyway angled with respect to its expanding direction.

Additionally, as said, in the detector according to the invention, the sensing element 35 in sponge, while dry, opposes the expansion force or release of an elastic element (Ml or Ml' or Ml"), whereas, while wet, it allows such an elastic element to expand or release; vice-versa, in the solutions according to the prior art, a sponge element, while dry, is provided to ensure an expanding condition for an elastic element and, while wet, for compressing such an elastic element.

Moreover, in the prior art, no examples are available in which the shutter means enters the space the leakage detector 35 occupies when in a dry condition.

Such a approach of use of a sponge element, compared to the one obtainable according to the prior art, allows its employment for supporting loads of several kilograms.

Therefore, according to the above, it is clear how the element 35 according to the invention can be of a small dimensions.

Since the element 35 according to the present invention is capable of withstanding loads of several kilograms, it becomes apparent how the elastic means M1 or M1' or M1" to which the element 35 is opposed, may be of the type apt generate a clearly higher force compared to the known solutions; this ensures a higher certainty of intervention of the detector; for the above reasons it should be noticed, for example, how the effects of possible frictions produced by the gaskets or similar sealing means result absolutely irrelevant.

Moreover, even if the size is smaller, the material forming the sensing element 35 is able to withstand and maintain its own mechanical feature and of fast intervention features unaltered, also in the event of impacts, falls or vibrations as they may be occasionally caused to the device 1, differently from the use of soluble materials.

From the above description it will also become apparent how the detector according to the invention is particularly cost effective by virtue of the use of simple elements, being of high repetitive processing, and of smaller size compared to the prior art.

It is obvious that many variants are possible for the man skilled in the art to the detector device and/or to the anti-flooding safety device integrating it, described above by way of example, without departing from the novelty spirit of the innovative idea.

For example, in a particularly advantageous embodiment, the element 35 can be provided with a film envelope having a predetermined resistance to cracking, i.e. capable of withstanding the likely and moderate expansion of the anhydrous sponge due to environmental dampness, and on the contrary ensure the fast breakage, when the sponge is flooded with water.

Such a housing may for example consist of a paper with good mechanical resistance features to the hygroscopic conditions of normal operation of the device, but not enough sufficient for withstanding a thrust generated by the sponge expansion when flooded by leakage water.

Said envelope may be realized in any suitable material, even synthetic, eventually with a perforated surface and/or predetermined break-through lines, calibrated for resisting as long as the stress induced by the sponge expansion from inside the envelope to the outside does not exceed a certain value, which can be attained only following the expansion caused by the contact with water of the sponge.

This envelope may be of the partially permeable type and/or provided to cover only some surfaces of the element 35; in particular, with reference to the example previously described, the envelope may only enclose the side surfaces of the element 35, while leaving exposed its upper and lower surfaces, which are in contact with the slider 34 or 34' or 34" and the wall 36B or 36B' or 36B", respectively.

It has to be noticed that the presence of said envelope for the sponge element 35 does not practically involve any size increase, thus warranting all the advantages previously mentioned. It is anyway clear that many other changes are possible for the man skilled in the art to the device described above by way of example, without departing from the novelty spirit of the innovative idea.

It has also to be appreciated how the liquid detector according to the present invention is not exclusively provided for the use in the field of anti-flooding safety devices; in this frame, it is clear that the detector described above can have advantageous application also in other areas, where a liquid detector is required, of the type being capable of generating an intervention control for an interlocked device, such as an intercepting valve of a liquid flow, or an alarm device, and where such a detector should comprise:
- actuating means capable of movement between a first position, in which said intervention control is not generated, and a second position, in which said intervention control is generated;
- sensor means apt to detect the presence of liquid and consequently cause said actuating means to pass from said first position to said second position.

In this frame, the detector may be utilized for performing signalling and/or actuating functions; for example, the detector 3C of Figs. 6 and 7, instead of being coupled to an anti-flooding safety device as previously described, could be associated to signalling system in general, by connecting the appropriate connectors 31A" of the switch 31" to a warning light or signalling lamp; another possible use would be to connect terminals 31A" of the detector 3C to electric leads being part of the supply circuit of an hydraulic pump, which provides for discharging a liquid, when the latter is detected as already described above.

Reference has been previously made to the use of anhydrous sponge of the compressed type; however, it is clear that the sensing element 35 according to the invention may also consist of anhydrous sponge which is dried when still in an expanded condition; obviously, even if the starting size of the element 35 is bigger than previously described, the material forming the part is exactly the same, i.e. without any costs increase. Also in this application, anyway, the already expanded anhydrous sponge element 35 will tend to collapse fast when coming in contact with leakage water, without any substantial expansion of its volume, being it already in an expanded condition.

As said, the material forming the element 35 can be of different nature, provided it can ensure a non-fragile structure, which is apt to soften when coming in contact with a liquid.

Finally, according to a possible variant embodiment of the present invention, alternatively or additionally to a spring, the movement of the components or sliders 34 and/or 34' and/or 34" and/or the collapsing of the element 35 could be favoured by the association of a weight to said sliders, or manufacturing such elements in a material having a specific gravity being sufficient for the purpose.

In this frame, therefore, the sensing element 35 operates for maintaining or supporting the slider 34 and/or 34' and/or 34" in its respective rest position in opposition to the gravity of a weight located above the element 35 itself and/or associated or related to the slider 34 and/or 34' and/or 34".

Finally, the wall 36B and/or 36B' and/or 36B" could have suitable means, such as projections, for indicating and/or guiding during the assembly steps of the detector the correct orientation of the element 35, in order to avoid a wrong positioning of the latter, however without causing any hindrances to its expansion.

According to a further variant embodiment, for example, the actuating means could comprise a pair of magnets, appropriately positioned opposite to each other, in a way to have the equal polarities facing to each other.

In this instance, the slider 34 would be divided in two distinct parts, each one of them comprising a magnet.

The liquid detector according to the present invention has been previously described with particular reference to anti-flooding safety devices where the leakage sensing means are arranged in a liquid collecting tray.

It is however clear that the idea at the basis of the present invention could be equally applied to those devices, of the type cited at the beginning of the present description, having two concentric tubes, between which a closed hollow space is defined.

According to such an embodiment, the anti-flooding safety device therefore comprises a first duct for the passage of the liquid, being at least partly enclosed within a second conduit, wherein between said first conduit and said second conduit a hollow space is defined, said hollow space being capable of retaining leakage water eventually exiting from said first conduit. As provided in the prior art, intercepting means are provided on the first conduit, being capable of moving from a first position, in which the passage of the liquid within the first conduit is allowed, to a second position, in which the passage of the liquid within the first conduit is prevented. In the hollow space, or in hydraulic communication with it, also the sensing means will be arranged, which will be operative according to the principles described above with reference to the element 35, and capable to detect the present of liquid within the hollow space and consequently cause the passage of the intercepting means from the first position to the second position. Also in this embodiment of the invention, the sensing means will be normally operative for opposing the passage of the intercepting means from said first position to the second position; following their contact with liquid being eventually present in the hollow space, the sensing means will be capable of reducing their consistency or solidity, as previously described, for allowing the intercepting means to assume said second position.

## Claims

1. Liquid detector, of the type capable of generating an intervention control for a associated device, said detector comprising:
- actuating means (34;34';34") capable of movement between a first position, in which said intervention control is not generated, and a second position, in which said intervention control is generated;
- sensor means (35) of the insoluble type, apt to detect the presence of liquid and consequently cause said actuating means (34;34';34") to pass from said first position to said second position;
characterized in that:
- upon absence of liquid, said sensor means (35) are normally operative for opposing themselves to the passage of said actuating means (34;34';34") from said first position to said second position;
- following their contact with liquid, said sensor means (35) are apt to have their consistency or solidity reduced, for allowing said actuating means (34;34';34") taking said second position.

2. A detector, according to claim 1, characterized in that said sensor means (35) are normally operative for maintaining or supporting said actuating means (34;34';34") in said first position, in opposition to or against the action of a force.

3. A detector, according to claim 2, characterized in that said force is produced by elastic means (M1;M1';M1").

4. A detector, according to claim 1, characterized in that said sensor means (35) are operative for maintaining or supporting said actuating means (34;34';34") in said first position in opposition to or against the action of a gravity force, said gravity force being in particular induced by a weight associated to said sensor means (35) and/or associated or related to said actuating means (34;34';34").

5. A detector, according to claim 1, characterized in that supporting means are provided for maintaining said actuating means (34;34';34") in said first position, said supporting means being realized by said sensor means (35).

6. A detector, according to claim 1, characterized in that said sensor means (35) are realized from a material which, in the event of soaking, is subject to a softening and/or a fast reduction of its own consistency or its initial solidity characteristics, said material comprising in particular paper and/or a mixture of fibres and/or a material of vegetal origin and/or a cellulose product, with the likely addition of binding and/or preserving agents.

7. A detector, according at least to one of the previous claims, characterized in that said material comprises a sponge material and/or said sensor means comprise an element (35) in anhydrous sponge.

8. A detector, according to claim 1 or 7, characterized in that at least a part of said actuating means (34;34';34") are directly in contact with and/or rest on said sensor means or sponge element (35).

9. A detector, according to claim 1 or 7, characterized in that said sensor means or sponge element (35) are apt to expand their volume according to a first substantially predefined direction when in contact with said liquid.

10. A detector, according to the previous claim, characterized in that the consistency of said sensor means or sponge element (35) decreases in accordance with a second direction, which is angled and/or perpendicular with respect to said first direction of expansion.

11. A detector, according to claim 1 or 7, characterized in that said sensor means or sponge element (35) are not provided for generating forces or thrusts aimed at producing a displacement of said actuating means (34;34';34").

12. A detector, according to one or more of the previous claims, characterized in that said actuating means comprise a sliding element (34") and that said elastic means (Ml") operate between a surface of the body of said detector and the end of said sliding element (34") which is in contact with and/or rests on said sensor means or sponge element (35).

13. A detector, according to one or more of the previous claims, characterized in that said actuating means comprise a sliding element (34;34') and that said elastic means (M1; Ml') operate between a surface of the body of said detector and the end of said sliding element (34;34') which is opposite to the one which is in contact with and/or rests on said sensing means or sponge element (35).

14. A detector, according to claim 1 or 7, characterized in that positioning means (34B,36C;34B',36C';34B",36C") are provided for maintaining said sensor means or sponge element (35) in the correct operating condition, without however determining any hindrances or frictions to its reduction of consistency and/or expansion.

15. A detector, according at least to one of the previous claim, characterized in that said sensor means or sponge element (35) comprise a film envelope having a predetermined resistance to breakage, in particular such to withstand a likely and moderate expansion of the sensor means or sponge element (35) due to environmental dampness, whereas it breaks rapidly following the expansion of said sensor means or sponge element (35) when the latter come into contact with liquid.

16. A detector, according to one or more of the previous claims, characterized in that said associated device is an intercepting valve being part of an anti-flooding safety device, in particular for washing machines.

17. A liquid detector, of the type capable of generating an intervention control for a associated device, said detector comprising:
- actuating means (34;34';34"), capable of movement between a first position, in which said intervention control is not generated, and a second position, in which said intervention control is generated;
- sensor means (35) of the insoluble type, capable of detecting the presence of liquid and causing as a consequence the passage of said actuating means (34;34';34") from said first position to said second position;
characterized in that
- upon absence of liquid, said sensor means (35) are normally operative for opposing themselves to the passage of said actuating means (34;34';34") from said first position to said second position;
- following their contact with liquid, said sensor means (35) are capable of leaving room available to said actuating means (34;34';34"), for allowing the latter to pass from said first position to said second position.

18. An anti-flooding safety device, in particular for washing machines, of the type comprising:
- a first supply duct (6) for a liquid;
- intercepting means (20) operating on said first duct (6);
- a liquid detector (3A;3B;3C) which, upon detecting the presence of liquid, is capable of generating an intervention control for said intercepting means (20), aimed at determining the closure of said first duct (6), said liquid detector (3A;3B;3C) being in a remote position with respect to said intercepting means (20);
- transmission means (12';12";12"') for transferring said control from said liquid detector (3A;3B;3C) to said intercepting means (20);
where said liquid detector (3A;3B;3C) comprises:
- actuating means (34;34';34"), capable of movement between a first position, in which said intervention control is not generated, and a second position, in which said intervention control is generated;
- sensor means (35) of the insoluble type, capable of detecting the presence of liquid and causing as a consequence the passage of said actuating means (34;34';34") from said first position to said second position;
characterized in that
- upon absence of liquid, said sensor means (35) are normally operative for opposing themselves to the passage of said actuating means (34;34';34") from said first position to said second position;
- following their contact with liquid, said sensor means (35) are apt to have their consistency or solidity reduced, for allowing said actuating means (34;34';34") taking said second position.

19. A device, according to the previous claim, characterized in that said intercepting means (20) comprise a pneumatically actuated valve, or a mechanically actuated valve, or an electrically actuated valve.

20. A device, according at least to one of the previous claims, characterized in that said detector is housed in a collecting tray (11) arranged inside a washing machine (1).

21. An anti-flooding safety device, in particular for washing machines, of the type comprising:
- a first supply duct (6) for a liquid ;
- intercepting means (20) operating on said first duct (6);
- a liquid detector (3A;3B;3C) which, upon detecting the presence of liquid, is capable of generating an intervention control for said intercepting means (20), aimed at determining the closure of said first duct (6), said liquid detector (3A;3B;3C) being in a remote position with respect to said intercepting means (20);
- transmission means (12';12";12"') for transferring said control from said liquid detector (3A;3B;3C) to said intercepting means (20);
where said liquid detector (3A;3B;3C) comprises:
- actuating means (34;34';34"), capable of movement between a first position, in which said intervention control is not generated, and a second position, in which said intervention control is generated;
- sensor means (35) of the insoluble type, capable of detecting the presence of liquid and causing as a consequence the passage of said actuating means (34;34';34") from said first position to said second position;
characterized in that:
- upon absence of liquid, said sensor means (35) are normally operative for opposing themselves to the passage of said actuating means (34;34';34") from said first position to said second position;
- following their contact with liquid, said sensor means (35) are capable of leaving room available to said actuating means (34;34';34"), for allowing the latter to pass from said first position to said second position.

22. An actuation method of a liquid detector of the type capable of generating an intervention instruction for an associated device, said detector comprising:
actuating means (34;34';34"), capable of movement between a first position, in which said intervention control is not generated, and a second position, in which said intervention control is generated;
- sensor means (35) of the insoluble type, capable of detecting the presence of liquid and causing as a consequence the passage of said actuating means (34;34';34") from said first position to said second position;
characterized in that :
- under normal operating conditions or upon absence of liquid, said sensor means (35) have a consistency being sufficient for maintaining said actuating means (34;34';34") in said first position;
- the detection of the presence of liquid is determined by a reduction of consistency or solidity of said sensor means (35), when they are in contact with liquid, said reduction of consistency or solidity allowing said actuating means (34;34';34") to take said second position.

23. A method, according to the previous claim, characterized in that said sensor means (35) are normally operative for contrasting the release force of an elastic element (M1;M1'M1") and that following their contact with liquid, said sensor means (35) allows said elastic element (M1;M1'M1") to release.

24. A method, according to previous claim, characterized in that said sensor means (35) are capable to absorb water, for determining a softening and/or a fast loss of their initial solidity or consistency characteristics.

25. A method, according to one or more of the previous claims, characterized in that said liquid detector (3;3A;3B;3C) is used for determining the intervention of an anti-flooding safety device, in particular for household appliances.

26. An anti-flooding safety device, in particular for household appliances, of the type comprising:
- a first supply duct for a liquid which is at least partially enclosed within a second duct, a hollow space being defined between said first duct and said second duct, where said hollow space is capable of retaining leakage liquid eventually flowing out from said first duct;
- intercepting means being provided along said first duct and capable of movement from a first position, in which the passage of the liquid within said first conduit is allowed, to a second position, in which the passage of the liquid within said first conduit is prevented;
- sensor means arranged in said hollow space, or in hydraulic communication with said hollow space, capable of detecting the presence of liquid within said hollow space and consequently causing the passage of said intercepting means from said first position to said second position,
characterized in that
said sensor means are normally operative for opposing themselves to the passage of said intercepting means from said first position to said second position,
- following their contact with liquid, being eventually present within said hollow space, said sensor means are apt to have their consistency or solidity reduced, for allowing said intercepting means to take said second position.
